**Europäisches Patentamt**

**European Patent Office**

**Office européen des brevets**

(19)

(11) Numéro de publication : **0 479 653 B1**

(12) **FASCICULE DE BREVET EUROPEEN**

(45) Date de publication du fascicule du brevet :
08.06.94 Bulletin 94/23

(51) Int. Cl.⁵ : **B60P 1/44**

(21) Numéro de dépôt : **91402576.2**

(22) Date de dépôt : **26.09.91**

(54) **Ensemble de montage d'un hayon élévateur rétractable parallèlement au châssis d'un véhicule.**

(30) Priorité : **03.10.90 FR 9012202**

(43) Date de publication de la demande :
**08.04.92 Bulletin 92/15**

(45) Mention de la délivrance du brevet :
**08.06.94 Bulletin 94/23**

(84) Etats contractants désignés :
**BE DE GB IT**

(56) Documents cités :
**EP-A- 0 089 941**
**BE-A- 905 515**
**DE-U- 7 932 830**
**GB-A- 1 546 090**

(73) Titulaire : **HYDRIS SOCIETE ANONYME**
**Z.I. Bellevue,**
**B.P. 37**
**F-35220 Chateaubourg (FR)**

(72) Inventeur : **Tortellier, Christian**
**Le Ponloup,**
**Servon sur Vilaine**
**F-35530 Noyal sur Vilaine (FR)**

(74) Mandataire : **Hoisnard, Jean-Claude et al**
**Cabinet Beau de Loménie**
**158, rue de l'Université**
**F-75340 Paris Cédex 07 (FR)**

Jouve, 18, rue Saint-Denis, 75001 PARIS

## Description

L'invention est relative à l'ensemble de montage d'un hayon élévateur sur le châssis d'un véhicule, un tel hayon étant du type rétractable selon les dispositions connues, une poutre supportant les organes mécaniques et hydrauliques tels que les bras de levage, les vérins de levage, et les vérins d'inclinaison pour l'orientation de la plate-forme. Afin de rétracter cet ensemble sous le châssis d'un véhicule, la poutre est montée sur des coulisses pouvant se déplacer d'avant en arrière et vice versa sur des coulisseaux généralement de section cylindrique, situés de part et d'autre du châssis du véhicule et parallèles aux longerons de celui-ci. Les mouvements de sortie ou de rétraction sont réalisés par un ou des vérins hydrauliques à double effet, situés à l'intérieur du châssis, entre les longerons et parallèlement à ceux-ci.

L'évolution de la conception des véhicules, avec l'implantation de suspension pneumatique, de freinage électrique, d'équipement pneumatique avec bonbonne d'air, conduit à une occupation de plus en plus importante de l'espace compris entre les longerons du châssis et à une réduction consécutive de l'espace qui reste disponible pour l'implantation des vérins de commande du hayon rétractable.

L'invention permet de remédier à cet état de chose, dans la mesure où les dispositifs qui composent le système de commande sont regroupés en deux rails formant coulisses à l'intérieur desquels sont disposés les vérins hydrauliques. Ces deux rails, situés de part et d'autre des longerons du châssis, évitent l'implantation de vérins hydrauliques entre les longerons du véhicule, et permettent d'éviter des modifications importantes, et d'obtenir un gain de temps pour l'installation d'un hayon élévateur rétractable.

De plus, l'adoption d'un vérin particulier, spécialement conçu pour résoudre le problème d'encombrement, permet d'obtenir une course importante avec un corps extérieur dont la longueur est très réduite par rapport au déploiement total. Les efforts dus au poids du mécanisme de hayon élévateur et à la charge nominale de la plate-forme du hayon élévateur sont directement transmis par l'intermédiaire d'un support solidaire du corps extérieur du vérin.

Aux deux extrémités de ce même corps sont disposées deux bagues prenant appui sur la coulisse. Par cette réalisation aucun effort n'est reporté sur la partie interne du vérin (d'où une protection des joints d'étanchéité, des écrous, des pistons, des tiges de pistons, etc.... .

L'invention est donc relative à un ensemble de montage sur le châssis d'un véhicule d'un hayon élévateur rétractable parallèlement audit châssis, tel que défini dans le préambule de la revendication 1 et tel que déjà connu par BE-A-905 515.

Conformément à l'invention, les dispositions de la partie caractérisante de la revendication 1 sont adoptées.

Les avantageuses dispositions suivantes sont en outre de préférence adoptées :

- au moins une bague de guidage est fixée sur l'élément mobile de vérin et constitue un coulisseau qui coopère avec la paroi interne de guidage du profilé pour réaliser le coulissement de la poutre par rapport au châssis ;
- le vérin comporte au moins un cylindre et au moins une tige de piston montée à coulissement par rapport audit cylindre, cependant que ledit élément mobile de vérin est constitué par ledit cylindre ;
- ladite tige de piston constitue ledit élément de vérin fixe par rapport au châssis et possède une extrémité externe fixée sur une plaque transversale, qui est elle-même fixée sur une extrémité que comporte ledit profilé ;
- ledit vérin comporte : un premier cylindre qui comporte lui-même deux fonds extrêmes, et dont est solidaire vis-à-vis du coulissement ledit support de fixation de la poutre ; un premier piston monté coulissant par rapport audit premier cylindre ; une première tige de piston solidaire dudit premier piston vis-à-vis du coulissement du premier piston par rapport au premier cylindre et comportant un évidement cylindrique interne constituant un deuxième cylindre, ce deuxième cylindre comportant lui-même deux fonds extrêmes ; un deuxième piston monté coulissant par rapport au deuxième cylindre ; une deuxième tige de piston, qui est solidaire du deuxième piston vis-à-vis du coulissement du deuxième piston par rapport au deuxième cylindre, qui est fixée sur une plaque transversale, elle-même fixée sur une extrémité que comporte le profilé ; et deux conduits principaux de fluide, ménagés dans le corps du premier cylindre et débouchant à l'intérieur dudit premier cylindre à proximité desdits deux fonds extrêmes de ce premier cylindre ; cependant que la première tige de piston traverse les deux dits fonds du premier cylindre, et, que le premier piston est unique et disposé dans la zone médiane de la première tige de piston et est sensiblement équidistante des deux dits fonds du deuxième cylindre ;
- le plan transversal médian perpendiculaire à l'axe de la première tige de piston et équidistant des deux fonds du deuxième cylindre passe par le premier piston ;
- deux conduits internes sont ménagés dans la première tige de piston et débouchent, le premier de ces deux conduits internes, d'une part, à proximité d'un premier côté du premier piston, d'autre part, à proximité d'un premier des deux fonds du deuxième cylindre, et, le deuxième conduit interne, d'une part, à proximité du deuxième côté dudit premier piston, d'autre part, à proximité du deuxième des deux fonds du deuxième cylindre ;

- les deux conduits principaux débouchent à l'intérieur du premier cylindre, l'un à proximité de l'un des deux fonds dudit premier cylindre, l'autre à proximité de l'autre fond du premier cylindre.

L'avantage principal de l'invention est, d'une part, de proposer un ensemble de montage d'un hayon élévateur rétractable qui peut être placé à un emplacement autre qu'entre les longerons du châssis, et qui, de ce fait, laisse une latitude importante au fabricant du véhicule pour disposer entre les longerons les équipements nombreux dudit véhicule, étant en outre facilement adaptable à tout véhicule, d'autre part, et dans le cadre dudit ensemble, d'adopter dans cet ensemble un vérin particulièrement compact qui facilite encore plus la mise en place de cet ensemble de montage sur le châssis du véhicule.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés, dans lesquels :

- la figure 1 est une coupe axiale d'un vérin conforme à l'invention ;
- la figure 2 est une vue représentant, dans trois configurations distinctes, et en coupe axiale, le vérin de la figure 1 ;
- la figure 3 est une vue perspective représentant une disposition antérieure connue d'un ensemble de montage d'un hayon élévateur rétractable sur le châssis d'un véhicule ;
- la figure 4 est une vue perspective représentant un ensemble de montage, conforme à l'invention, d'un hayon élévateur rétractable sur le châssis d'un véhicule ;
- la figure 5 représente, en coupe axiale, un vérin de commande, dont est muni l'ensemble de montage de la figure 4, équipé des organes complémentaires qui en permettent l'adaptation audit ensemble ;
- la figure 6 est une vue en élévation, avec coupe partielle, de l'ensemble de montage de la figure 4 ;
- la figure 7 est une coupe suivant VII-VII de la figure 6.

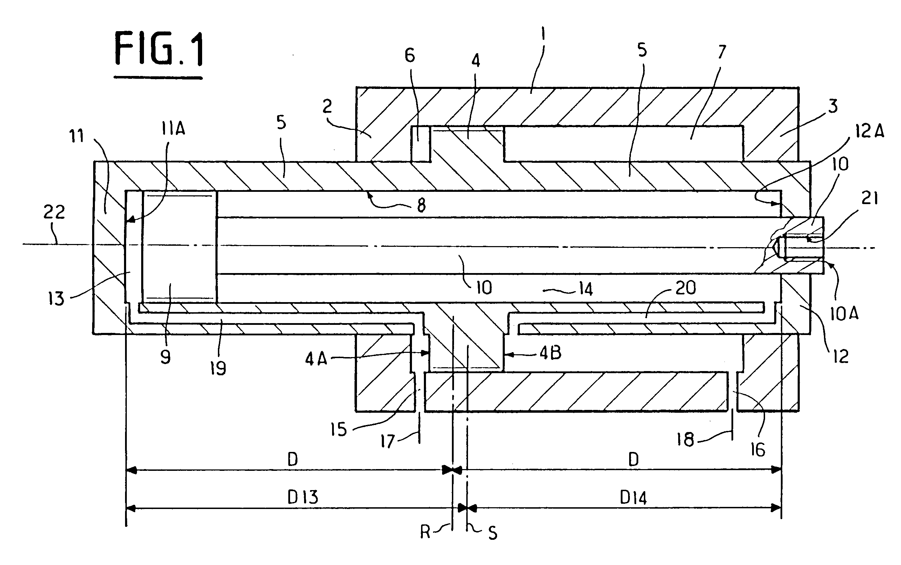

Le vérin de la figure 1 comprend :

- un premier cylindre 1, muni de deux fonds extrêmes 2 et 3 ;
- un premier piston 4, qui est monté coulissant à l'intérieur du premier cylindre 1 ;
- une première tige de piston 5, dont est solidaire le premier piston 4, qui s'étend de part et d'autre dudit premier piston 4 et traverse les deuxdits fonds 2 et 3, et qui, en coopération avec le premier piston 4 définit, à l'intérieur du premier cylindre 1, deux chambres 6 et 7 de travail d'un fluide ;

- un deuxième cylindre 8, qui est constitué par la première tige de piston 5 elle-même, et qui est délimité par un évidement axial longitudinal que comporte cette première tige de piston 5 et ledit premier piston 4, et par deux fonds extrêmes 11,12, respectivement, dudit deuxième cylindre ;
- un deuxième piston 9, qui est monté coulissant à l'intérieur du deuxième cylindre 8 ;
- une deuxième tige de piston 10, qui est solidaire du deuxième piston 9, qui s'étend d'un seul côté dudit deuxième piston et traverse le fond 12 du deuxième cylindre 8, et qui, en coopération avec le deuxième cylindre 8, ses fonds 11 et 12 et le deuxième piston 9, définit à l'intérieur du deuxième cylindre deux chambres de travail 13,14 ;
- deux conduits principaux de fluide 15,16, qui traversent la paroi du premier cylindre 1 et débouchent à l'intérieur du premier cylindre, dans les chambres 6,7, à proximité des fonds 2,3 et sont susceptibles d'être reliés à des conduits extérieurs de fluide 17,18, respectivement ;
- deux conduits internes 19,20, qui sont ménagés dans l'épaisseur de la première tige de piston 5, un premier 19 de ces conduits internes débouchant à proximité du premier piston 4, dans la chambre 6, et à proximité du fond 11 dans la chambre 13, reliant en permanence ces chambres 6 et 13, l'autre conduit interne 20 débouchant à proximité du premier piston 4, dans la chambre 7, et, à proximité du fond 12, dans la chambre 14, reliant en permanence ces chambres 7 et 14.

Un taraudage 21, réalisé dans l'extrémité externe 10A de la deuxième tige de piston 10 permet la fixation de celle-ci sur une structure.

A noter que le plan transversal R, perpendiculaire à l'axe 22 du vérin, et équidistant des faces internes 11A et 12A des fonds 11 et 12 (distances D), passe à travers le premier piston 4, alors que le plan transversal S, perpendiculaire à l'axe 22, qui est équidistant des deux faces 4A,4B du premier piston 4, est sensiblement équidistant des faces 11A,12A (distance D13 voisine de, éventuellement égale à la distance D14).

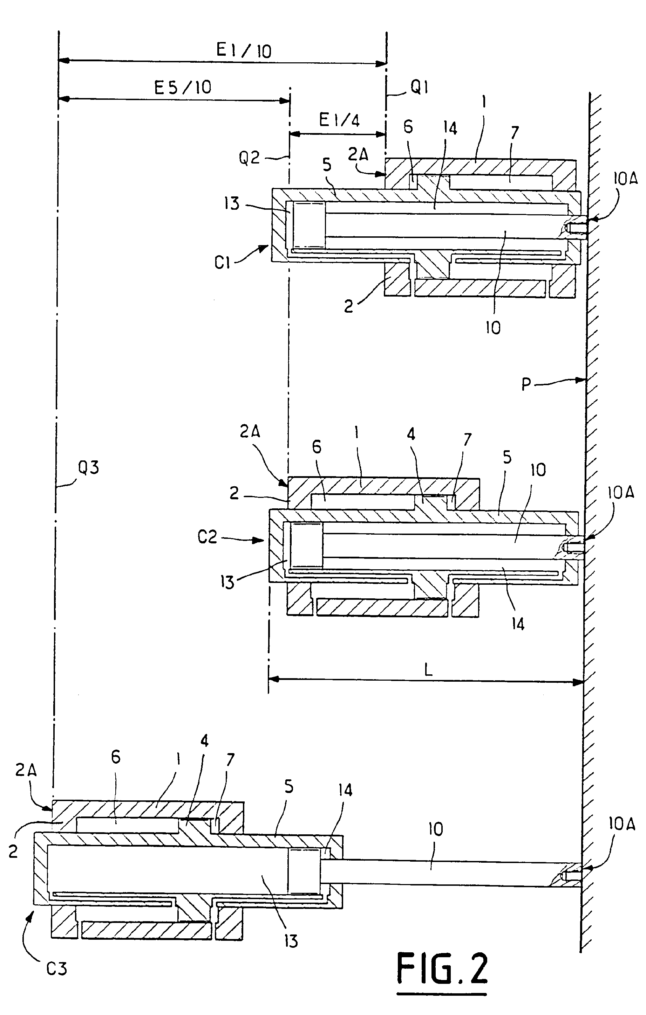

Sur la figure 2, l'extrémité externe 10A de la deuxième tige de piston 10 étant contenue, dans les trois configurations représentées du vérin, dans un même plan P, le premier cylindre 1 occupe les positions distinctes suivantes :

- dans la configuration C1, les chambres 6 et 13 ont leurs volumes minimaux, le vérin est complètement rétracté et a une longueur hors tout L ; la face externe 2A du fond 2 du premier cylindre est contenue dans le plan Q1 ;

- dans la configuration suivante C2, le volume de la chambre 13 reste minimal, mais celui de la chambre 6 est maximal, le premier cylindre 1 s'est déplacé, par rapport au premier piston 4 de la course maximale E 1/4 possible par rapport au premier piston 4, et sa face externe 2A du fond 2 est maintenant contenue dans le plan Q2 ;
- enfin, dans la configuration C3, les volumes des chambres 6 et 13 sont maximaux, le vérin étant en complète extension, et la face externe 2A du fond 2 du premier cylindre, contenue dans le plan Q3, étant écartée de sa précédente position de la figure 2 de la valeur de la course maximale E5/10 de la première tige de piston 5 par rapport à la deuxième tige de piston 10, et le premier cylindre 1 s'étant déplacé par rapport à la deuxième tige de piston 10, entre la configuration C1 et la configuration C3, de la course totale E1/10, avec, bien entendu :

$$E1/10 = E1/4 + E5/10.$$

L'intérêt du vérin qui vient d'être décrit est d'obtenir une valeur E1/10 importante avec une valeur L relativement petite. A noter, dans la réalisation représentée que E1/10 est supérieure à L (en fait, ici, E1/10 = 1,06 L). Il convient de noter également que le vérin est simple, ne comportant aucun clapet permettant d'alimenter séquentiellement les chambres les unes après les autres : ici, le fluide se répartit sans restriction entre les chambres 6 et 13, d'une part, entre les chambres 7 et 14, d'autre part. La position particulière du premier piston 4, sensiblement équidistant des fonds 11 et 12, c'est-à-dire des extrémités de la première tige de piston 5, rend possible son déplacement d'un côté ou de l'autre du premier piston 4, alors même que la course E 5/10 correspond à la longueur totale, importante, de la première tige de piston 5.

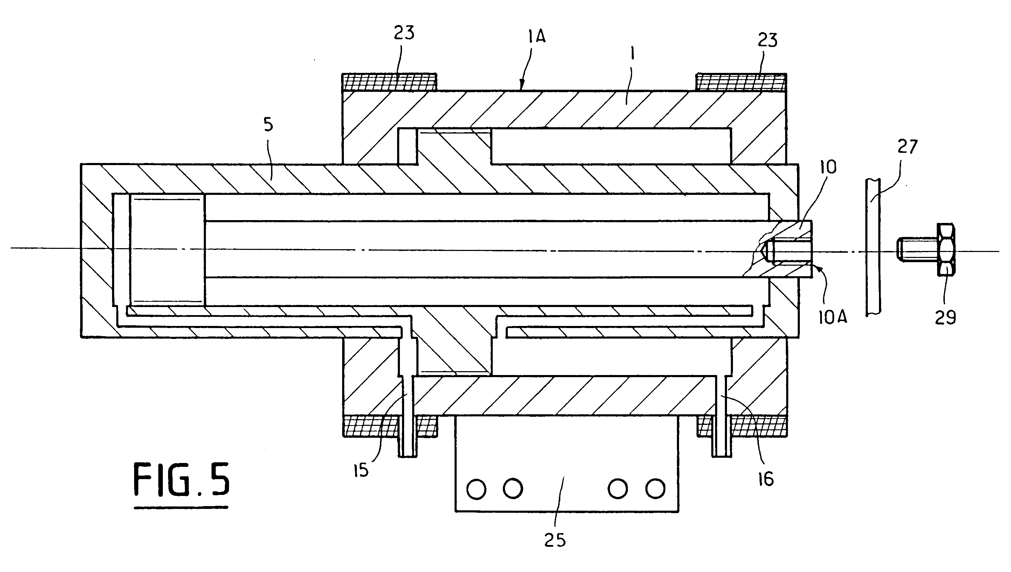

Ce vérin peut être complété comme indiqué sur la figure 5 :

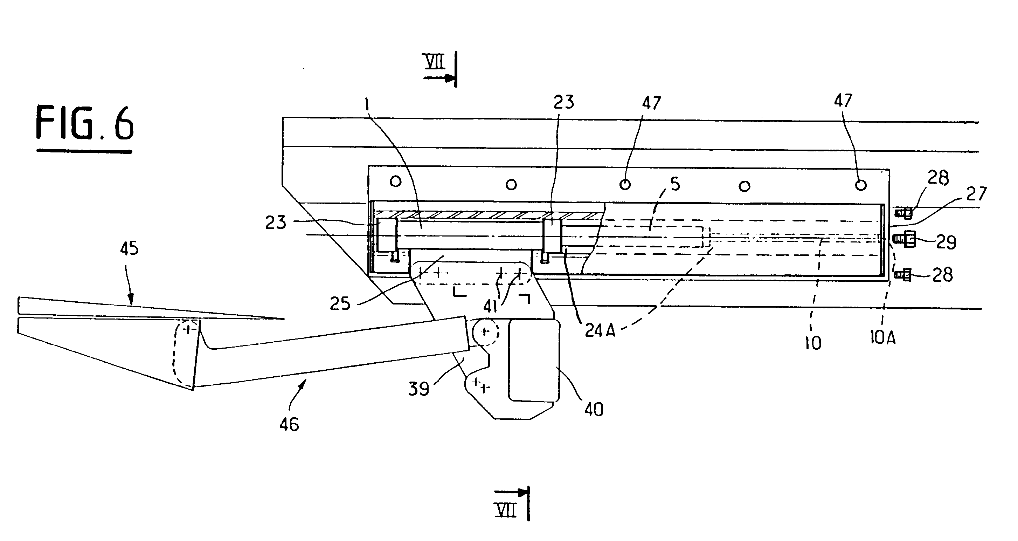

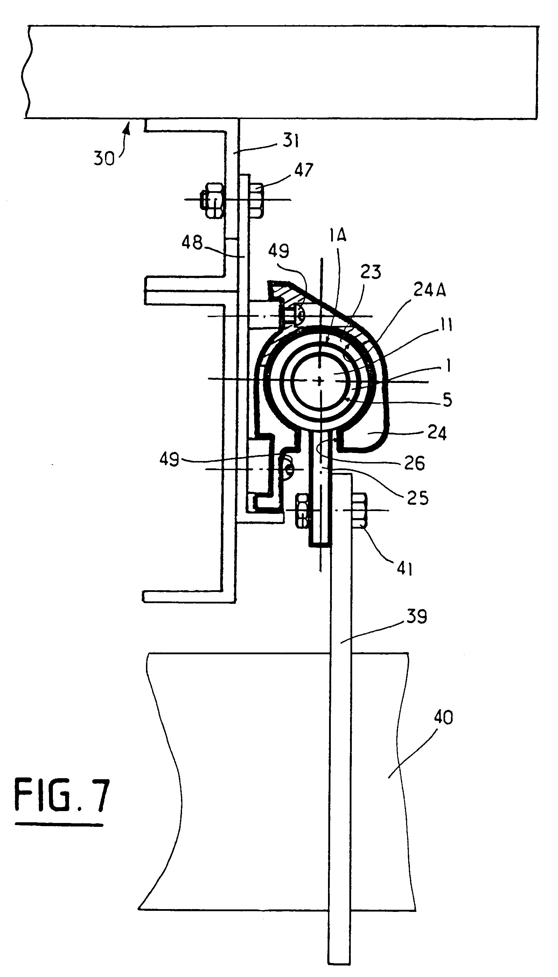

- deux bagues 23 sont fixées sur la face cylindrique externe 1A du premier cylindre 1, et réalisées en un matériau à faible coefficient de frottement, constituent des coussinets de coulissement du premier cylindre 1 par rapport à la face interne cylindrique 24A d'un profilé 24 (figures 6 et 7).
- une plaque, formant support de fixation 25, est solidaire du premier cylindre 1, s'étendant vers le bas à partir de sa face externe 1A et traverse une fente longitudinale 26, dont est muni le profilé 24 à sa partie inférieure (figure 7) ;
- une plaque 27 peut être fixée sur une tranche d'extrémité du profilé 24 au moyen de vis 28, une vis 29 permettant la fixation de la deuxième tige de piston 10 sur ladite plaque 27, et donc son immobilisation par rapport au profilé 23.

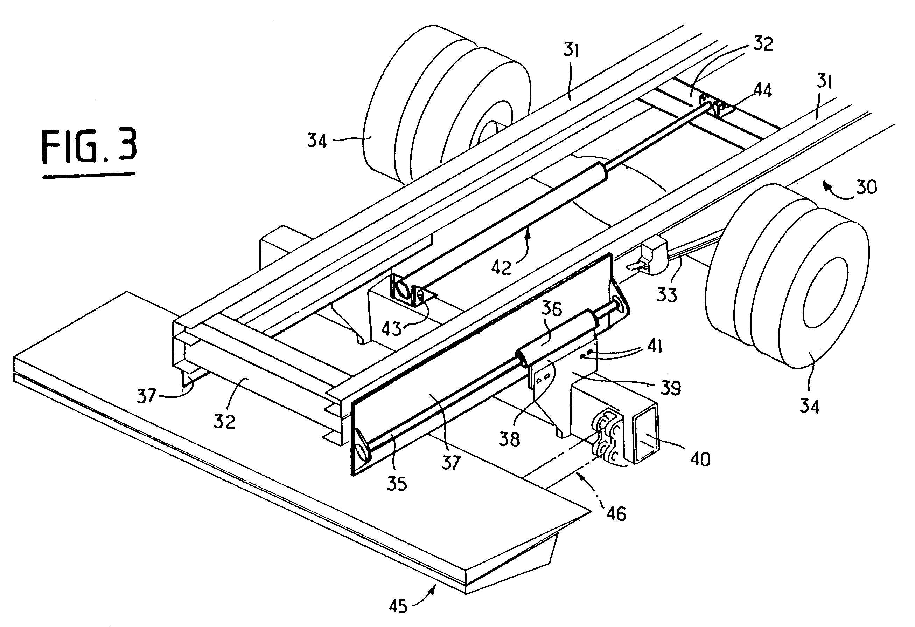

Afin d'expliquer l'apport de l'invention par rapport à l'art antérieur, il apparaît judicieux de décrire, au moins brièvement, une réalisation antérieure. Celle-ci est représentée sur la figure 3, qui illustre :

- le châssis 30 d'un véhicule (en l'espèce d'un camion) constitué par deux longerons longitudinaux 31 reliés par des traverses transversales 32 et reposant sur le sol par l'intermédiaire d'une suspension 33 et de roues 34 ;
- deux ensembles de glissière 35 et de coulisseaux 36 montés, chacun, sur une platine 37, les platines 37 des deux ensembles étant fixées à l'extérieur des longerons, l'une sur un longeron, l'autre sur l'autre longeron, par soudure ou boulonnage ;
- deux plaques, supports de fixation 38, solidaires chacune d'un coulisseau 36 ;
- deux plaques d'adaptation 39, solidaires d'une poutre transversale 40 et fixées, chacune, sur l'un des supports de fixation 38 au moyen de boulons 41 ;
- un vérin 42 de commande de coulissement longitudinal de la poutre 40, parallèlement aux longerons 31 et aux glissières 35, attelé à la poutre 40 par un axe 43 et à l'une des traverses 32 constituant le châssis 30 par un axe 44, ce vérin 42 étant disposé entre les deux longerons 31.

Un hayon élévateur 45, comportant deux plates-formes repliables, est représenté dans sa configuration de reploiement des plates-formes. Le hayon élévateur 45 est relié à la poutre 40 par un ensemble 46 de bras articulés et de vérins et présente la particularité d'être rétractable sous le châssis 30. Le coulissement de la poutre 40 parallèlement aux longerons, commandé par le vérin 42, permet ce mouvement de retrait du hayon élévateur sous le châssis 30, ce qui rend possible le déplacement ultérieur du véhicule avec le hayon élévateur rangé, ne débordant pas hors des limites du châssis.

Il convient d'observer que, dans cette disposition connue, le vérin 42 occupe une place importante entre les longerons 31, rendant l'espace correspondant indisponible aux logements des équipements propres aux véhicules, tels que ceux relatifs à une suspension pneumatique, à un dispositif de freinage - électrique par exemple -, ou encore à un équipement pneumatique comprenant un volumineux réservoir d'air comprimé. De plus, dans les dispositions connues, le vérin 42 comporte un cylindre unique et a une longueur importante, supérieure à la course nécessaire au rangement du hayon élévateur de sa configuration d'utilisation à sa configuration de rangement sous le châssis 30. A noter que si, dans les dispositions connues, le hayon élévateur est rangé sous le châssis 30, la solution serait analogue si, dans certains véhicules, il devenait possible de ranger le hayon élévateur au-dessus du châssis et, naturellement, parallèlement à celui-ci.

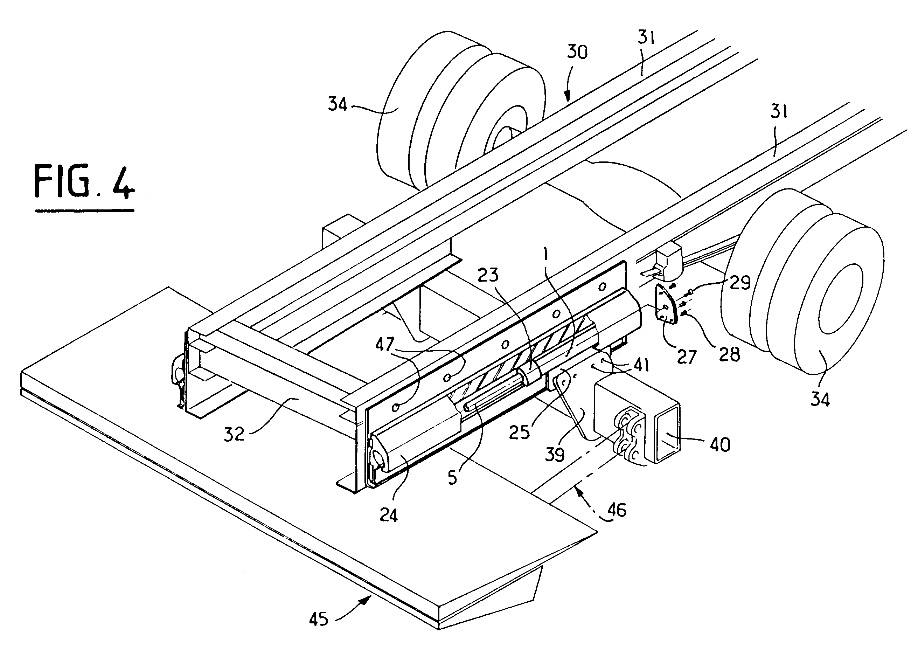

La figure 4 représente la nouvelle disposition proposée par l'invention. Cette disposition comprend :
- le châssis 30 et ses longerons 31 et traverses 32, tel que précédemment décrit ;
- deux profilés 24 fixés, chacun, par des vis 47, sur la face externe d'un longeron 31 ;
- deux vérins, du type représenté sur la figure 1, et complétés comme représenté sur la figure 5, introduits, chacun, dans une glissière 24A d'un profilé 24, la deuxième tige 10 de chaque vérin étant immobilisée par rapport au profilé 24 au moyen de la plaque 27 et la vis 29 ; et,
- les plaques d'adaptation 39, dont la poutre 40 est solidaire, et qui sont fixées sur les supports de fixation 25 des vérins au moyen des boulons 41.

Comme dans la réalisation connue auparavant, le hayon élévateur 45 est relié à la poutre 40 par un ensemble 46 de bras articulés et de vérins.

A noter que, pour des raisons de facilité de montage, le profilé 24 est fixé par des vis 49 sur une plaque intermédiaire 48, ladite plaque intermédiaire 48 étant elle-même fixée sur le longeron 31 par les vis 47.

Les avantages de cette disposition nouvelle sont évidents :
- l'espace compris entre les longerons 31 est complètement libre, disponible pour placer tous les équipements du véhicule nécessaires à son fonctionnement ;
- l'adaptation du hayon élévateur rétractable, non seulement ne gêne donc pas le fabricant du véhicule au moment de la conception de celui-ci, mais en outre est aisée, car limitée à la fixation de deux profilés 24 sur les faces externes dégagées des deux longerons 31.

Ces deux avantages sont obtenus quel que soit le type de vérins adoptés.

Par contre, lorsque les vérins adoptés sont du type de celui représenté sur la figure 1, leur compacité facilite encore davantage la mise en place de profilés 24 le long des longerons 31.

La facilité d'intervention sur l'ensemble doit être remarquée : les profilés 24, pris isolément, étant fixés sur les longerons 31 au moyen des vis 47, il suffit ultérieurement à cette fixation de présenter en regard de l'ouverture de ces profilés, à l'extrémité arrière des longerons, les vérins munis de leurs bagues de guidage 23 et de les introduire dans les profilés, puis de fixer les deuxièmes tiges de piston 10 des vérins sur les plaques 27 au moyen des vis 29 pour achever le montage d'un hayon élévateur 45 sur le châssis 30 d'un véhicule.

Il va de soi que la même facilité existe pour le démontage du hayon, ce qui rend également aisées les opérations d'entretien et de dépannage.

## Revendications

1. Ensemble de montage sur le châssis (30) d'un véhicule d'un hayon élévateur (45) rétractable parallèlement audit châssis, comprenant:
    - une poutre (40) supportant la plate-forme (45) dudit hayon et montée coulissante par rapport audit châssis ;
    - deux glissières (24) fixées sur ledit châssis (30) pour le montage à coulissement de ladite poutre, chaque glissière comprenant un profilé creux (24) portant une paroi longitudinale interne (24A) de guidage de coulissement d'un coulisseau (23-1) et une fente (26) permettant le passage d'un support (25) de fixation de ladite poutre (40), ledit support traversant ladite fente (26) et étant solidaire dudit coulisseau (23-1) ;
    - au moins un vérin de commande du coulissement de la poutre attelée entre le châssis et cette poutre et comportant un élément de vérin (10) fixe par rapport audit châssis (30) et un élément de vérin (1) mobile par rapport audit châssis (30) ;
    caractérisé en ce que :
    a) l'intérieur de chaque profilé reçoit un vérin (1-5-11) de commande du coulissement ; et
    b) l'élément mobile (1) dudit vérin de commande du coulissement reçu à l'intérieur de chaque profilé fait partie dudit coulisseau (23-1), dont est solidaire ledit support (25) de fixation de la poutre (40).

2. Ensemble selon la revendication 1, caractérisé en ce qu'au moins une bague de guidage (23) est fixée sur l'élément mobile de vérin (1) et constitue un coulisseau qui coopère avec la paroi (24A) interne de guidage du profilé (24) pour réaliser le coulissement de la poutre (40) par rapport au châssis (30).

3. Ensemble selon l'une quelconque des revendications 1 et 2, caractérisé en ce que le vérin comporte au moins un cylindre (1) et au moins une tige de piston (10) montée à coulissement par rapport audit cylindre, cependant que ledit élément mobile de vérin est constitué par ledit cylindre (1).

4. Ensemble selon la revendication 3, caractérisé en ce que ladite tige de piston (10) constitue ledit élément de vérin fixe par rapport au châssis et possède une extrémité externe (10A) fixée (29) sur une plaque transversale (27), qui est elle-même fixée sur une extrémité que comporte ledit profilé (24).

5. Ensemble selon l'une quelconque des revendications 1 à 4, caractérisé en ce que ledit vérin comporte :

- un premier cylindre (1) qui comporte lui-même deux fonds extrêmes (2,3), et dont est solidaire vis-à-vis du coulissement ledit support (25) de fixation de la poutre ;
- un premier piston (4) monté coulissant par rapport audit premier cylindre ;
- une première tige de piston (5) solidaire dudit premier piston vis-à-vis du coulissement du premier piston par rapport au premier cylindre et comportant un évidement cylindrique interne constituant un deuxième cylindre (8), ce deuxième cylindre (8) comportant lui-même deux fonds extrêmes (11,12) ;
- un deuxième piston (9) monté coulissant par rapport au deuxième cylindre (8) ;
- une deuxième tige de piston (10), qui est solidaire du deuxième piston vis-à-vis du coulissement du deuxième piston par rapport au deuxième cylindre qui est fixée sur une plaque transversale (27), elle-même fixée sur une extrémité que comporte le profilé (24) ; et
- deux conduits principaux de fluide (15,16), ménagés dans le corps du premier cylindre (1) et débouchant à l'intérieur dudit premier cylindre à proximité desdits deux fonds extrêmes (2,3) de ce premier cylindre ;

cependant que

c) la première tige de piston (5) traverse les deux dits fonds (2,3) du premier cylindre (1), et,

d) le premier piston (4) est unique et disposé dans la zone médiane (R) de la première tige de piston et est sensiblement équidistant des deuxdits fonds (11, 12) du deuxième cylindre (8).

6. Ensemble selon la revendication 5, caractérisé en ce que le plan transversal médian (R) perpendiculaire à l'axe (22) de la première tige de piston (5) et équidistant (D) des deux fonds (11,12) du deuxième cylindre (8) passe par le premier piston (4).

7. Ensemble selon l'une quelconque des revendications 5 et 6, caractérisé en ce que deux conduits internes (19,20) sont ménagés dans la première tige de piston (5) et débouchent, le premier (19) de ces deux conduits internes, d'une part à proximité d'un premier côté (4A) du premier piston (4), d'autre part à proximité d'un premier (11) des deux fonds du deuxième cylindre (8), et, le deuxième conduit interne (20), d'une part, à proximité du deuxième côté (48) dudit premier piston (4), d'autre part, à proximité du deuxième (12) des deux fonds du deuxième cylindre (8).

8. Ensemble selon l'une quelconque des revendications 5 à 7, caractérisé en ce que les deux conduits principaux (15,16) débouchent à l'intérieur du premier cylindre (4), l'un (15) à proximité de l'un (2) des deux fonds dudit premier cylindre (1), l'autre (16) à proximité de l'autre fond (3) du premier cylindre.

**Patentansprüche**

1. Vorrichtung zur Montage einer ausfahrbaren Ladebordwand (45) am Fahrgestell (30) eines Fahrzeugs parallel zu diesem Fahrgestell, umfassend:
   - einen die Bühne (45) der Ladebordwand tragenden und gegenüber dem Fahrgestell gleitend montierten Träger (40);
   - zwei am Fahrgestell (30) befestigte Gleitschienen (24) für die Gleitmontage dieses Trägers, wobei jede Gleitschiene ein Hohlprofil (24) mit einer inneren Längswand (24A) zur Führung der Gleitbewegung eines Schlittens (23-1) und einen Schlitz (26) aufweist, durch den eine Befestigungshalterung (25) dieses Trägers (40) geführt werden kann, wobei diese Halterung durch den Schlitz (26) geführt und fest mit dem genannten Schlitten (23-1) verbunden ist;
   - mindestens einen Antriebszylinder für die Gleitbewegung des zwischen dem Fahrgestell und diesem Träger befestigten Trägers, der ein bezüglich dem Fahrgestell (30) starres Zylinderelement (10) und ein bezüglich dem Fahrgestell (30) bewegliches Zylinderelement (1) aufweist;

   dadurch gekennzeichnet, daß

   a) das Innere jedes Profils einen Gleitantriebszylinder (1-5-11) aufnimmt; und

   b) das bewegliche Element (1) des im Inneren jedes Profils aufgenommenen Gleitantriebszylinders Teil des besagten Schlittens (23-1) ist, mit dem die Befestigungshalterung (25) des Trägers (40) fest verbunden ist.

2. Vorrichtung nach Anspruch 1, dadurch gekennzeichnet, daß mindestens ein Führungsring (23) am beweglichen Zylinderelement (1) befestigt ist und einen Schlitten bildet, der mit der Innenführungswand (24A) des Profils (24) zusammenwirkt, um das Gleiten des Trägers (40) bezüglich dem Fahrgestell (30) zu ermöglichen.

3. Vorrichtung nach einem der Ansprüche 1 und 2, dadurch gekennzeichnet, daß der Zylinder mindestens eine Trommel (1) und mindestens eine Kolbenstange (10) umfaßt, die bezüglich dieser Trommel gleitend montiert ist, während das bewegliche Zylinderelement aus dieser Trommel (1) besteht.

4. Vorrichtung nach Anspruch 3, dadurch gekennzeichnet, daß die besagte Kolbenstange (10) das bezüglich dem Fahrgestell feste Zylinderelement bildet und ein Außenende (10A) besitzt, das an einer Querplatte (27) befestigt (29) ist, die selbst an einem Ende des genannten Profils (24) befestigt ist.

5. Vorrichtung nach einem der Ansprüche 1 bis 4, dadurch gekennzeichnet, daß der besagte Zylinder folgende Teile umfaßt:
   - eine erste Trommel (1), die selbst zwei äußere Böden (2,3) aufweist, und mit welcher die Befestigungshalterung (25) des Trägers gegenüber der Gleitbewegung fest verbunden ist;
   - einen ersten, bezüglich der ersten Trommel gleitend montierten Kolben (4);
   - eine erste Kolbenstange (5), die fest mit dem ersten Kolben gegenüber dem Gleiten des ersten Kolbens bezüglich der ersten Trommel verbunden ist und einen zylindrischen Innenraum aufweist, der eine zweite Trommel (8) bildet, wobei diese zweite Trommel (8) selbst zwei Außenböden (11,12) aufweist;
   einen zweiten, bezüglich der zweiten Trommel (8) gleitend montierten Kolben (9);
   eine zweite Kolbenstange (10), die fest mit dem zweiten Kolben gegenüber dem Gleiten des zweiten Kolbens bezüglich der zweiten Trommel verbunden und an einer Querplatte (27) befestigt ist, die selbst wiederum an einem Ende des Profils (24) befestigt ist; und
   - zwei im Körper der ersten Trommel (1) vorgesehene Hauptleitungen (15,16) für Fluid, die im Innern der ersten Trommel nahe den beiden Außenböden (2,3) dieser ersten Trommel münden,
   während
   c) die erste Kolbenstange (5) durch die beiden genannten Böden (2,3) der ersten Trommel (1) führt und
   d) der erste Kolben (4) einzeln und im Mittelbereich (R) der ersten Kolbenstange und im wesentlichen in gleicher Entfernung von den beiden Böden (11,12) der zweiten Trommel (8) angeordnet ist.

6. Vorrichtung nach Anspruch 5, dadurch gekennzeichnet, daß die mittlere, zur Achse (22) der ersten Kolbenstange (5) und in gleicher Entfernung (D) von den beiden Böden (11,12) der zweiten Trommel (8) liegende Querebene (R) durch den ersten Kolben (4) führt.

7. Vorrichtung nach einem der Ansprüche 5 und 6, dadurch gekennzeichnet, daß in der ersten Kolbenstange (5) zwei Innenleitungen (19,20) vorgesehen sind, von denen die erste (19) zum einen nahe einer ersten Seite (4A) des ersten Kolbens (4) und zum anderen nahe einem ersten (11) der beiden Böden der zweiten Trommel (8) und von denen die zweite Innenleitung (20) zum einen nahe der zweiten Seite (4B) dieses ersten Kolbens (4) und zum anderen nahe dem zweiten (12) der beiden Böden der zweiten Trommel (8) mündet.

8. Vorrichtung nach einem der Ansprüche 5 bis 7, dadurch gekennzeichnet, daß die beiden Hauptleitungen (15,16) im Inneren der ersten Trommel (4) münden, und zwar die eine (15) nahe dem einen (2) der beiden Böden der ersten Trommel (1) und die andere (16) nahe dem anderen Boden (3) der ersten Trommel.

## Claims

1. Assembly for mounting on the chassis (30) of a vehicle an elevating tailgate (45) which is retractable parallel to the said chassis, comprising:
   - a beam (40) supporting the platform (45) of the said tailgate mounted to slide relative to the said chassis;
   - two slides (24) fixed to the said chassis (30) for the slidable mounting of the said beam, each slide comprising a hollow profile section (24) bearing an inner longitudinal guide wall (24A) for the sliding of a block (23-1) and a slot (26) for the passage of a fixing support (25) for the- said beam (40), the said support traversing the said slot (26) and being integral with the said block (23-1);
   - at least one actuator for controlling the sliding of the beam connected between the chassis and this beam and comprising an actuator element (10) fixed relative to the said chassis (30) and an actuator element (1) movable relative to the said chassis (30),
   characterised in that:
   a) the interior of each profile section receives an actuator (1-5-11) for controlling the sliding, and
   b) the movable element (1) of the said actuator for controlling the sliding received in the interior of each profile section forms part of the said block (23-1) with which the said fixing support (25) for the beam (40) is integral.

2. Assembly according to claim 1, characterised in that at least one guide ring (23) is fixed to the movable element of the actuator (1) and forms a block which cooperates with the inner guide wall (24A) of the profile section (24) in order to effect sliding of the beam (40) relative to the chassis (30).

3. Assembly according to either of claims 1 and 2, characterised in that the actuator comprises at least one cylinder (1) and at least one piston rod (10) mounted to slide relative to the said cylinder, while the said movable element of the actuator is formed by the said cylinder (1).

4. Assembly according to claim 3, characterised in that the said piston rod (10) forms the said actuator element fixed relative to the chassis and has one outer end (10A) fixed (29) to a transverse plate (27) which is itself fixed to an end provided on the said profile section (24).

5. Assembly according to any one of claims 1 to 4, characterised in that the said actuator comprises:
   - a first cylinder (1) which itself comprises two end bases (2, 3) and with which the said fixing support (25) for the beam is integral with respect to the sliding;
   - a first piston (4) mounted to slide relative to the said first cylinder;
   - a first piston rod (5) integral with the said first piston with respect to the sliding of the first piston relative to the first cylinder and comprising an inner cylindrical recess forming a second cylinder (8), this second cylinder (8) itself comprising two end bases (11, 12);
   - a second piston (9) mounted to slide relative to the second cylinder (8);
   - a second piston rod (10) which is integral with the second piston with respect to the sliding of the second piston relative to the second cylinder which is fixed to a transverse plate (27) itself fixed to an end provided on the profile section (24), and
   - two main fluid conduits (15, 16) formed in the body of the first cylinder (1) and opening in the interior of the said first cylinder in the vicinity of the said two end bases (2, 3) of this first cylinder;
   while
   c) the first piston rod (5) traverses the two said bases (2, 3) of the first cylinder (1), and
   d) the first piston (4) is unique and is disposed in the central zone (R) of the first piston rod and is substantially equidistant from the two said bases (11, 12) of the second cylinder (8).

6. Assembly according to claim 5, characterised in that the central transverse plane (R) perpendicular to the axis (22) of the first piston rod (5) and equidistant (D) from the two bases (11, 12) of the second cylinder (8) passes through the first piston (4).

7. Assembly according to either of claims 5 and 6, characterised in that two internal conduits (19, 20) are formed in the first piston rod (5), the first (19) of these two internal conduits opening, on the one hand, in the vicinity of a first side (4A) of the first piston (4) and, on the other hand, in the vicinity of a first (11) of the two bases of the second cylinder (8) and the second internal conduit (20) opening, on the one hand, in the vicinity of the second side (4B) of the said first piston (4) and, on the other hand, in the vicinity of the second (12) of the two bases of the second cylinder (8).

8. Assembly according to any one of claims 5 to 7, characterised in that the two main conduits (15, 16) open in the interior of the first cylinder (4), one (15) in the vicinity of one (2) of the two bases of the said first cylinder (1) and the other (16) in the vicinity of the other base (3) of the first cylinder.

# FIG.1

EP 0 479 653 B1

# FIG.2

# FIG.3

# FIG. 4

EP 0 479 653 B1

12

FIG.5

23   1A   1   23

5

27

13

10

10A

29

15   16

25

EP 0 479 653 B1

FIG.6

FIG. 7